(19) **Europäisches Patentamt**
**European Patent Office**
**Office européen des brevets**

(11) **EP 2 010 415 B1**

(12) **EUROPÄISCHE PATENTSCHRIFT**

(45) Veröffentlichungstag und Bekanntmachung des Hinweises auf die Patenterteilung:
**11.04.2012 Patentblatt 2012/15**

(21) Anmeldenummer: **07726441.4**

(22) Anmeldetag: **20.02.2007**

(51) Int Cl.:
***B60R 21/0132*** *(2006.01)*

(86) Internationale Anmeldenummer:
**PCT/EP2007/051620**

(87) Internationale Veröffentlichungsnummer:
**WO 2007/118725 (25.10.2007 Gazette 2007/43)**

(54) **VORRICHTUNG UND VERFAHREN ZUR ANSTEUERUNG VON PERSONENSCHUTZMITTELN UNTER BERÜCKSICHTIGUNG DES HAFTUNGSKOEFFIZIENTEN**

DEVICE AND METHOD FOR ACTUATING PASSENGER PROTECTION SYSTEMS CONSIDERING THE ROAD GRIP COEFFICIENT

DISPOSITIF ET PROCÉDÉ D'ACTIVATION DE MOYENS DE PROTECTION DES PERSONNES EN TENANT COMPTE DU COEFFFICIENT DE TENUE DE ROUTE

(84) Benannte Vertragsstaaten:
**DE ES FR GB IT**

(30) Priorität: **19.04.2006 DE 102006018029**

(43) Veröffentlichungstag der Anmeldung:
**07.01.2009 Patentblatt 2009/02**

(73) Patentinhaber: **Robert Bosch GmbH**
**70442 Stuttgart (DE)**

(72) Erfinder:
• **SCHMID, Michael**
**70806 Kornwestheim (DE)**
• **GOLOMBECK, Marc-Andre**
**72074 Tuebingen (DE)**
• **DOERR, Alfons**
**70597 Stuttgart (DE)**
• **DENZ, Holger**
**70839 Gerlingen (DE)**

(56) Entgegenhaltungen:
**WO-A-2006/081902 DE-A1- 10 303 148**

**Beschreibung**

Stand der Technik

Die Erfindung betrifft eine Vorrichtung bzw. ein Verfahren zur Ansteuerung von Personenschutzmitteln nach der Gattung des unabhängigen Patentanspruchs.

Aus der gattungsbildenden DE 103 03 149 A1 ist es bekannt, Personenschutzmittel bei einem Überschlagvorgang in Abhängigkeit von kinematischen Größen, wie der Fahrzeugquerbeschleunigung und einer Drehrate, anzusteuern. Aus DE 698 24 412 T2 ist es bekannt, ein Bremssystem vorzusehen, dass in Abhängigkeit von einem Überschlagsignal angesteuert wird.

Offenbarung der Erfindung

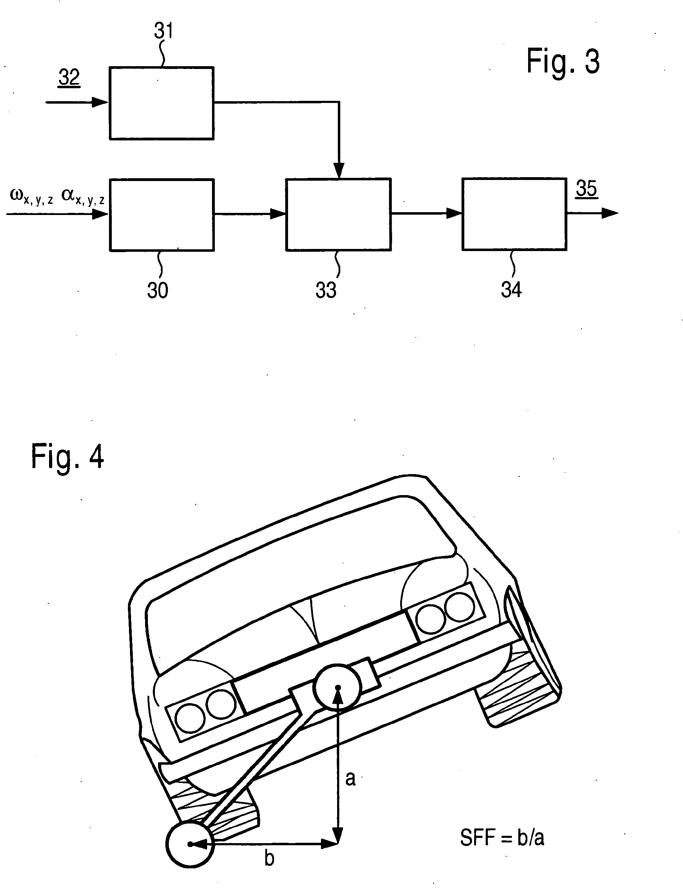

Die erfindungsgemäße Vorrichtung bzw. das erfindungsgemäße Verfahren zur Ansteuerung von Personenschutzmitteln haben demgegenüber den Vorteil, dass durch die Verwendung eines Haftkoeffizienten, der über eine Schnittstelle der erfindungsgemäßen Vorrichtung eingelesen wird, eine präzisere und zeitgenauere Auslösung der Personenschutzmittel bei einem Überrollvorgang möglich ist. Insbesondere kann über andere Fahrzeugsysteme, die den Haftkoeffizienten sehr genau berechnen, wie beispielsweise ein Bremssystem, ein Motorsystem oder über eine Radsensorik, eine höhere Genauigkeit bezüglich des Haftkoeffizienten erreicht werden. Durch den Vergleich mit dem Stabilitätsfaktor kann dann auch durch Vorhersage oder Beurteilung der aktuellen Haftköeffizienten und des aktuellen Stabilitätsfaktors eine Ansteuerung der Personenschutzmittel bei einem Fahrzeugüberschlag vorgenommen werden. Die Vorrichtung weist dafür eine Auswerteschaltung vor, die diesen Vergleich durchführt. Die Auswerteschaltung ist beispielsweise als Mikrocontroller ausgebildet. Bei dem Stabilitätsfaktor handelt es sich um das Verhältnis des vertikalen und horizontalen Abstands des Aufstandspunkt zum Fahrzeugschwerpunkt (Fig. 4). Der Aufstandspunkt ist der Reifen. Durch die Überrollbewegung, die vorzugsweise durch die Drehrate charakterisiert ist, verändert sich das Verhältnis von vertiikalem und horizontalem Abstand zwischen Aufstandspunkt und Fahrzeugschwerpunkt. Da der Ruhezustand bei stehendem Fahrzeug bekannt ist, kann aus wenigstens einer kinematischen Größe wie der Drehrate der Stabilitätsfaktor bestimmt werden.

Durch die in den abhängigen Ansprüchen aufgeführten Maßnahmen und Weiterbildungen sind vorteilhafte Verbesserungen der in den unabhängigen Patentansprüchen angegebenen Vorrichtung bzw. des in den unabhängigen Patentansprüchen angegebenen Verfahrens möglich.

Besonders vorteilhaft ist, dass eine Ansteuerschaltung vorgesehen ist, die Teil der Vorrichtung ist und zur Auswahl bzw. zum Blockieren von Personenschutzmitteln in Abhängigkeit von dem Vergleich zwischen Haftkoeffizient und Stabilitätsfaktor verwendet wird. Zur Bestimmung des Stabilitätsfaktors wird vorzugsweise die Wankrate und eine weitere kinematische Größe, wie beispielsweise die Verzögerung in Fahrzeuglängsrichtung, in Fahrzeugquerrichtung und/oder Fahrzeugvertikalrichtung, verwendet. Die Sensorik kann sich innerhalb oder außerhalb eines Steuergeräts zur Ansteuerung von Personenschutzmitteln befinden. Insbesondere ist es möglich, dass die Vorrichtung zur Ansteuerung der Personenschutzmittel in einem eigenen Steuergerät vorgesehen ist oder Teil eines weiteren Steuergeräts ist, beispielsweise zur Behandlung einer aktiven Sicherheit, wie einem Steuergerät zur Fahrdynamikregelung. Die erfindungsgemäße Schnittstelle ist dann innerhalb des Steuergeräts. Liegt ein eigenes Steuergerät zur Ansteuerung der Personenschutzmittel vor, dann ist die Schnittstelle nach außen, also beispielsweise ein Buscontroller, wenn der Haftkoeffizient von einem Steuergerät für Fahrdynamikregelung erzeugt wird und über einen Fahrzeugbus, beispielsweise einen CAN-Bus, an das Steuergerät zur Ansteuerung der Personenschutzmittel übertragen wird.

Die Auswerteschaltung ist insbesondere zur Prädiktion, also zur Vorhersage des Haftkoeffizienten, konfiguriert. Dabei können dem Fachmann geläufige Algorithmen zur Prädiktion verwendet werden. Insbesondere kann aus einem Verhalten durch Vergleich mit abgespeicherten Daten auf ein zukünftiges Verhalten geschlossen werden. Dabei können übliche Methoden des sogenannten Fittings verwendet werden.

Ausführungsbeispiele der Erfindung sind in der Zeichnung dargestellt und werden in der nachfolgenden Beschreibung näher erläutert.

Es zeigen

Figur 1    ein Blockschaltbild der erfindungsgemäßen Vorrichtung,

Figur 2    ein weiteres Blockschaltbild,

Figur 3    ein drittes Blockschaltbild und

Figur 4    eine Prinzipdarstellung.

Zahlen aus den USA belegen die Bedeutung der passiven Sicherheit bei Fahrzeugüberschlägen. Im Jahr 1998 war die Hälfte aller tödlichen Einzelfahrzeugunfälle auf einen Überschlag zurückzuführen. Im gesamten Unfallgeschehen nimmt der Fahrzeugüberschlag einen Anteil von rund 20 % ein.

Erfindungsgemäß wird nunmehr der aktuelle Haftkoeffizient als eine wesentliche Einflußgröße in der Überrolldynamik von Fahrzeugen dazu verwendet, um Personenschutzmittel bei einem Überrollvorgang anzusteuern. Die zeitliche Änderung der Wankrate wird durch folgende Gleichung definiert:

$$\frac{d}{d_t}\omega_x(t) = \frac{h_{eff}}{J}\left(1 - \frac{SSF_{eff}}{\mu(t)}\right) \cdot F_y(t)$$

$\omega_x$ ist dabei die aktuelle Drehrate des Fahrzeugs um den Aufstandspunkt des Fahrzeugs während des Fahrzeugüberschlags, $d/dt\omega_x$ die aktuelle Änderung der Drehrate. $F_y(t)$ ist die lateral wirkende Kraft infolge der lateralen Fahrzeugbewegung. Die aktuell wirkenden lateralen Kräfte bzw. die Schätzung der noch wirkenden Kräfte, die mit Hilfe von Beschleunigungssensoren gemessen bzw. vorhergesagt werden können, sind demnach nur ein Kriterium, das für die Vorhersage von Fahrzeugüberschlägen wesentlich ist. Unterschreitet der aktuelle bzw. zukünftige Haftkoeffizient den effektiven Stabilitätsfaktor SSF (Static Stability Factor) des Fahrzeugs, so wird keine Überrollbewegung des Fahrzeugs zu erwarten sein. J ist das bekannte entsprechende Trägkeitsmoment des Fahrzeugs und $h_{eff}$ die aktuelle Schwerpunktshöhe des Fahrzeugs am Überrollpunkt. Der effektive SSF des Fahrzeugs ist das sich bei einem Überrollvorgang kontinuierlich verändernde Verhältnis (SSF=b/a) des vertikalen (a) und lateralen Abstands (b) des Fahrzeugschwerpunkts 41 zum aktuellen Aufstandspunkt 40, wie es Fig. 4 erläutert. Der Auftandspunkt ist der Drehpunkt des Fahrzeugs. Der effektive SSF nimmt in der Regel mit steigendem Rollwinkel ab. Die Schwerpunktslage wird durch den Fahrzeughersteller mittels einer Waageeinrichtung bestimmt und liegt damit als Datum vor. Bei einer Neigung des Fahrzeugs kann die veränderte Lage des Schwerpunkts anfangs näherungsweise aus den Federkennlinien, beim Start des Rollovervorgangs über die Räder aus dem Rollwinkel und der maximalen Einfederung der Räder abgeschätzt werden. Die geschätzte Lage kann durch Vergleich des aktuell wirkenden Drehmoments aus der Drehrate $\omega_x$ zu den aktuell wirkenden Beschleunigungen im Schwerpunkt aus den Beschleunigungen $a_y$ und $a_z$ verifiziert werden: M=F*r. M ist proportional zur Drehbeschleunigung, F proportional zur linearen Beschleunigung in y- und z-Richtung. r ist der Abstand zum Aufstandspunkt.

Der Haftkoeffizient $\mu(t)$ wird beispielsweise gemäß der Lehre der DE 41 34 831 A1 bestimmt. Dort ist der Haftkoeffizient als Reibbeiwert bezeichnet. Die Reibbeiwertinformation wird abhängig von der Größe des erfassten Antriebsmoments erzeugt. Es gibt jedoch auch andere Methoden, um den Haftkoeffizienten zu ermitteln. Dazu gehört beispielsweise auch eine Beobachtung der Fahrbahnoberfläche mittels Radar oder andere bekannte Methoden. Durch die erfindungsgemäße explizite Verwendung des Haftkoeffizienten, die beispielsweise von anderen Fahrzeugsystemen über die Schnittstelle mit deutlich hoher Genauigkeit zur Verfügung gestellt werden, kann die Auslöseperfomance von Fahrzeugüberrollsensierungssystemen aufgrund der höheren Informationsqualität verbessert werden.

Durch die Auswertung der aktuellen Wankbewegung und die Beschleunigungen in x- und/oder y- und/oder z-Richtung des Fahrzeugs wird dessen effektiver Stabilitätsfaktor SSF (Static Stability Factor) bestimmt. Nach folgender Beziehung wird bestimmt, ob ein Überrollvorgang vorliegt:

$$SSF_{eff}(t) < \mu(t)$$

Übersteigt der effektive SSF den aktuellen beziehungsweise den zeitnah zu erwartenden Haftkoeffizienten, so wird eine Aktivierung entsprechender Rückhaltemittel und Schutzsysteme für den Fahrzeugüberschlag in Abhängigkeit der aktuellen Drehrate und/oder Drehwinkel eingeschränkt und/oder blockiert.

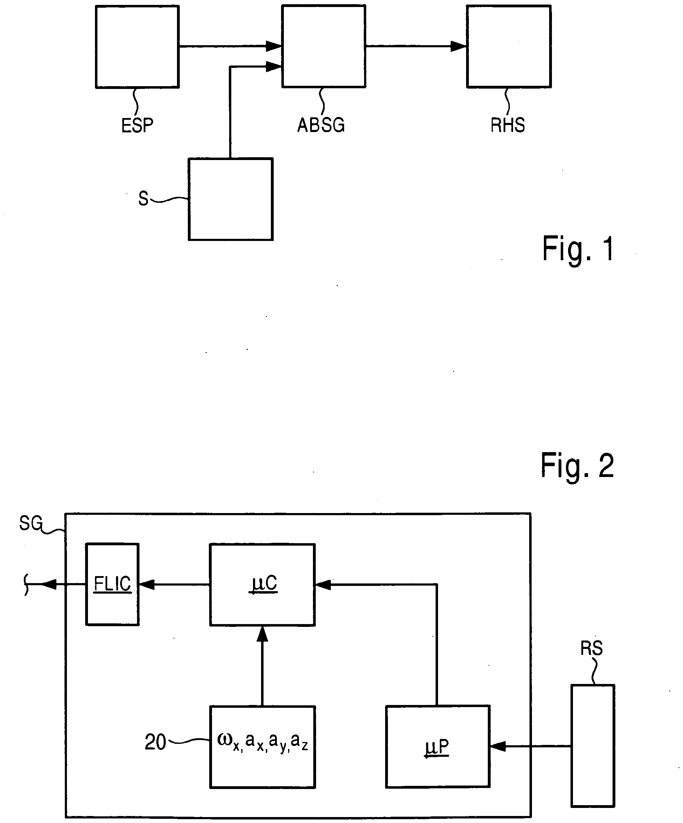

Figur 1 zeigt in einem ersten Blockschaltbild eine Ausführungsform der Erfindung. Ein Steuergerät zur Fahrdynamikregelung ESP ist an ein Airbagsteuergerät ABSG angeschlossen. Das Steuergerät für die Fahrdynamikregelung ESP überträgt den Haftkoeffizienten, den dieses Steuergerät bestimmt, an das Airbagsteuergerät ABSG. Die Verbindung kann eine Punkt-zu-Punkt-Verbindung sein, es kann jedoch auch eine Busverbindung vorgesehen sein, beispielsweise über den CAN-Bus. Weiterhin ist an das Airbagsteuergerät ABSG eine Sensorik S angeschlossen, die kinematische Größen in den Raumrichtungen des Fahrzeugs erfasst, aber auch rotatorische Bewegungen, wie die Wankrate $\omega_x$. Diese Sensoren können auch innerhalb des Airbagsteuergeräts ABSG positioniert sein oder zumindest teilweise sich im Steuergerät befinden. Auch das Steuergerät ESP kann einen Teil dieser Sensoren umfassen. In Abhängigkeit von dem Haftkoeffizient und dem Stabilitätsfaktor SSF, der in Abhängigkeit von den Größen der Sensorik S bestimmt wird, steuert das Airbagsteuergerät ABSG die Personenschutzmittel RHS, Airbags, Überrollbügel oder Gurtstraffer an. Bei der Ansteuerung können auch noch weitere Sensorgrößen, wie die einer Insassensensorik, beispielsweise Kraftsensoren einer Umfeldsensorik oder andere Crashgrößen, berücksichtigt werden.

Figur 2 zeigt ein weiteres Blockschaltbild der erfindungsgemäßen Vorrichtung. Nunmehr sind alle wichtigen Komponenten in einem Steuergerät SG platziert. Als Auswerteschaltung ist hier ein Mikrocontroller $\mu$C vorgesehen. An diesen Mikrocontroller liefert ein Mikroprozessor $\mu$P den Haftkoeffizienten. Dieser wird anhand von Daten, beispielsweise einer Radsensorik oder anderer Daten, bestimmt. Der Haftungskoeffizient wird anhand von Daten beispielsweise von einer Radarsensorik in Kombination mit Gierraten- und/oder Beschleunigungs- und/oder Lenkwinkelsensoren und/oder in Kombination von Motormoment- und Getriebeinformationen bestimmt. Grundlage für die Haftkoeffizientenbestimmung auf Basis der genannten Daten sind bekannte, allgemein gültige Fahrzeugmodelle.

Anstatt eines Mikrocontroller $\mu$C oder eines Mikroprozessors $\mu$P können auch andere Prozessorarten verwendet werden. Der Mikrocontroller $\mu$C, als die Auswerteschaltung, steuert Personenschutzmittel an und zwar über eine Ansteuerschaltung FLIC, also einer Zündkreisansteuerung. Für diese Ansteuerung verwendet der Mikrocontroller $\mu$C über eine Software, also einen Auslösealgorithmus, auch Daten einer Sensorik 20 zur Erfassung von Bewegungsgrößen, wie den Verzögerungen in Fahrzeuglängs-, -quer- und/oder -vertikalrichtung und der Wankrate $\omega_x$. In Abhängigkeit davon sperrt bzw. schränkt der Mikrocontroller $\mu$C über die Ansteuerschaltung FLIC die Anzahl und Art der anzusteuernden Personenschutzmittel ein. Die Auslöseentscheidung kann hier auch auf Basis von anderen Daten, beispielsweise dem Schwimmwinkel und der Fahrzeugquerbeschleunigung bzw. Fahrzeugquergeschwindigkeit oder allein der Drehrate $\omega_x$ bzw. dem Drehwinkel $\alpha_x$, bestimmt werden. Teile der hier in Figur 2 dargestellten Komponenten können sich außerhalb oder innerhalb des Steuergeräts SG befinden.

Figur 3 zeigt in einem weiteren Blockschaltbild den Ablauf des erfindungsgemäßen Verfahrens. In Verfahrensschritt 30 wird der Stabilitätsfaktor SSF des Fahrzeugs anhand von Drehraten und Beschleunigung, beispielsweise auch von Drehraten um die Fahrzeugquerachse oder die Fahrzeugvertikalachse, bestimmt. In Block 31 werden die Daten 32 zur Bestimmung des Haftkoeffizienten zwischen den Rädern und dem Untergrund herangezogen. Dafür können Radgeschwindigkeiten, Motormoment und Bremskraft und andere Daten verwendet werden. Aus dem Haftkoeffizienten und dem Stabilitätsfaktor SSF werden in Block 33 Vergleiche gezogen und gegebenenfalls auch Prädiktionen für den zukünftigen Verlauf eines Fahrzeugüberschlags oder ob der Fahrzeugüberschlag überhaupt stattfinden kann. In Block 34 wird damit eine Plausibilisierung von Auslöseentscheidungen durchgeführt bzw. ein Auslösealgorithmus oder mehrere Algorithmen aktiviert. Letztlich kommt es dann zur Aktivierungsentscheidung 35.

**Patentansprüche**

1. Vorrichtung zur Ansteuerung von Personenschutzmitteln (RHS), wobei die Vorrichtung die Personenschutzmittel (RHS) in Abhängigkeit von einem Überrollvorgang ansteuert, **dadurch gekennzeichnet, dass** die Vorrichtung eine Schnittstelle aufweist, über die die Vorrichtung ein Signal, das einen Haftungskoeffizienten ($\mu$) überträgt, empfängt und dass die Vorrichtung eine Auswerteschaltung ($\mu$C) aufweist, wobei die Auswerteschaltung ($\mu$C) in Abhängigkeit von dem Signal und einem Stabilitätsfaktor (SSF), die Personenschutzmittel ansteuert, wobei die Auswerteschaltung ($\mu$C) den Stabilitätsfaktor (SSF) in Abhängigkeit wenigstens einer kinematischen Größe aus den Größen einer Sensorik (S) bestimmt.

2. Vorrichtung nach Anspruch 1, **dadurch gekennzeichnet, dass** die Vorrichtung weiterhin eine Ansteuerschaltung (FLIC) aufweist, die in Abhängigkeit von einem Ansteuersignal der Auswerteschaltung eine Auswahl bzw. Blockierung der Personenschutzmittel (RHS) vornimmt.

3. Vorrichtung nach einem der Ansprüche 1 oder 2, **dadurch gekennzeichnet, dass** eine Sensorik zur Erfassung von kinematischen Größen vorgesehen ist, die mit der Auswerteschaltung ($\mu$C) verbunden ist, wobei die Sensorik zur Erfassung der Wankrate ($\omega_x$) und wenigstens einer weiteren Größe konfiguriert ist.

4. Vorrichtung nach einem der vorhergehenden Ansprüche, **dadurch gekennzeichnet, dass** die Auswerteschaltung derart konfiguriert ist, dass die Auswerteschaltung anhand des Signals und des Stabilitätsfaktors eine Vorhersage dieser Größen vornimmt.

5. Vorrichtung nach einem der vorhergehenden Ansprüche, **dadurch gekennzeichnet, dass** die Schnittstelle in einem Steuergerät vorgesehen ist und eine Verbindung zu einer Fahrdynamikregelung schafft.

6. Vorrichtung nach einem der vorhergehenden Ansprüche, **dadurch gekennzeichnet, dass** die Schnittstelle als Buscontroller ausgebildet ist.

7. Verfahren zur Ansteuerung von Personenschutzmittein, wobei die Personenschutzmittel in Abhängigkeit von einem Überrollvorgang angesteuert werden, **dadurch gekennzeichnet, dass** über eine Schnittstelle ein Signal empfangen wird, das einen Haftungskoeffizienten kennzeichnet, dass in Abhängigkeit von dem Signal und einem Stabilitätsfaktor die Personenschutzmittel angesteuert werden, wobei der Stabilitätsfaktor in Abhängigkeit von wenigstens einer kinematischen Größe bestimmt wird.

8. Verfahren nach Anspruch 7, **dadurch gekennzeichnet, dass** in Abhängigkeit von einem Ansteuersignal eine Auswahl und/oder eine Blockierung von Personenschutzmitteln vorgenommen wird.

9. Verfahren nach Anspruch 7 oder 8, **dadurch gekennzeichnet, dass** in Abhängigkeit von dem Signal und dem Stabilitätsfaktor diese Größen vorhergesagt werden.

**Claims**

1. Device for actuating vehicle occupant protection means (RHS), wherein the device actuates the vehicle occupant protections means (RHS) as a function of a rollover process, **characterized in that** the device has an interface via which the device receives a signal which transmits a coefficient of adhesion ($\mu$), and **in that** the device has an evaluation circuit ($\mu$C), wherein the evaluation circuit ($\mu$C) actuates the vehicle occupant protection means as a function of the signal and of a stability factor (SSF), wherein the evaluation circuit ($\mu$C) determines the stability factor (SSF) from the variables of a sensor system (S) as a function of at least one kinematic variable.

2. Device according to Claim 1, **characterized in that** the device also has an actuation circuit (FLIC) which selects or blocks the vehicle occupant protection means (RHS) as a function of an actuation signal of the evaluation circuit.

3. Device according to one of Claims 1 or 2, **characterized in that** a sensor system for sensing kinematic variables is provided, which sensor system is connected to the evaluation circuit ($\mu$C), wherein the sensor system is configured to sense the rolling rate ($\omega_x$) and at least one further variable.

4. Device according to one of the preceding claims, **characterized in that** the evaluation circuit is configured in such a way that the evaluation circuit predicts these variables on the basis of the signal and of the stability factor.

5. Device according to one of the preceding claims, **characterized in that** the interface is provided in a control unit and it forms a connection to a vehicle dynamics controller.

6. Device according to one of the preceding claims, **characterized in that** the interface is embodied as a bus controller.

7. Method for actuating vehicle occupant protection means, wherein the vehicle occupant protection means are actuated as a function of a rollover process, **characterized in that** a signal which characterizes a coefficient of adhesion is received via an interface, **in that** the vehicle occupant protection means are actuated as a function of the signal and of a stability factor, wherein the stability factor is determined as a function of at least one kinematic variable.

8. Method according to Claim 7, **characterized in that** vehicle occupant protection means are selected and/or blocked as a function of an actuation signal.

9. Method according to Claim 7 or 8, **characterized in that** these variables are predicted as a function of the signal and of the stability factor.

**Revendications**

1. Dispositif pour commander des moyens de protection personnelle (RHS), le dispositif commandant les moyens de protection personnelle (RHS) en fonction d'une opération de retournement, **caractérisé en ce que** le dispositif présente une interface par le biais de laquelle le dispositif reçoit un signal qui transmet un coefficient d'adhérence ($\mu$) et **en ce que** le dispositif présente un circuit d'interprétation ($\mu$C), le circuit d'interprétation ($\mu$C) commandant les moyens de protection personnelle en fonction du signal et d'un facteur de stabilité (SSF), le circuit d'interprétation

($\mu$C) déterminant le facteur de stabilité (SSF) en fonction d'au moins une grandeur cinématique parmi les grandeurs d'un dispositif de détection (S).

2.  Dispositif selon la revendication 1, **caractérisé en ce que** le dispositif présente en outre un circuit de commande (FLIC) qui effectue une sélection ou un blocage des moyens de protection personnelle (RHS) en fonction d'un signal de commande du circuit d'interprétation.

3.  Dispositif selon l'une des revendications 1 ou 2, **caractérisé en ce qu'**il est prévu un dispositif de détection pour détecter des grandeurs cinématiques, lequel est relié avec le circuit d'interprétation ($\mu$C), le dispositif de détection étant configuré pour détecter le taux de vacillement ($\omega_x$) et au moins une autre grandeur.

4.  Dispositif selon l'une des revendications précédentes, **caractérisé en ce que** le circuit d'interprétation est configuré de telle sorte que le circuit d'interprétation effectue une prévision de ces grandeurs au moyen du signal et du facteur de stabilisation.

5.  Dispositif selon l'une des revendications précédentes, **caractérisé en ce que** l'interface est prévue dans un contrôleur et établit une liaison avec un régulateur de la dynamique de conduite.

6.  Dispositif selon l'une des revendications précédentes, **caractérisé en ce que** l'interface est réalisée sous la forme d'un contrôleur de bus.

7.  Procédé pour commander des moyens de protection personnelle, les moyens de protection personnelle étant commandés en fonction d'une opération de retournement, **caractérisé en ce qu'**un signal est reçu par le biais d'une interface, lequel caractérise un coefficient d'adhérence, **en ce que** les moyens de protection personnelle sont commandés en fonction du signal et d'un facteur de stabilité, le facteur de stabilité étant déterminé en fonction d'au moins une grandeur cinématique.

8.  Procédé selon la revendication 7, **caractérisé en ce qu'**une sélection et/ou un blocage des moyens de protection personnelle sont effectués en fonction d'un signal de commande.

9.  Procédé selon la revendication 7 ou 8, **caractérisé en ce qu'**une prévision de ces grandeurs est effectuée en fonction du signal et du facteur de stabilité.

Fig. 1

Fig. 2

Fig. 3

$\omega_{x,y,z}$ $\alpha_{x,y,z}$

Fig. 4

SFF = b/a

**IN DER BESCHREIBUNG AUFGEFÜHRTE DOKUMENTE**

**In der Beschreibung aufgeführte Patentdokumente**

- DE 10303149 A1
- DE 69824412 T2
- DE 4134831 A1